# FASCICULE DE BREVET EUROPEEN

(11) **EP 3 690 303 B1**
(45) Date de publication et mention de la délivrance du brevet: **11.12.2024**
(21) Numéro de dépôt: 20151344.7
(22) Date de dépôt: 13.01.2020
(51) Int. Cl.: F17C 5/02

(54) **PROCÉDÉ ET UN DISPOSITIF DE REMPLISSAGE D'UN STOCKAGE DE GAZ LIQUÉFIÉ**
VERFAHREN UND VORRICHTUNG ZUM FÜLLEN EINES FLÜSSIGGASBEHÄLTERS
PROCESS AND DEVICE FOR FILLING A LIQUEFIED GAS VESSEL

(30) Priorité: 31.01.2019 FR 1900911
(43) Date de publication de la demande: 05.08.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ALLIDIERES, Laurent, 75321 Paris (FR); THIEU, Anh Thao, 78350 Les Loges-en-Josas (FR); FAYER, Thomas, 38360 Sassenage (FR)
(74) Mandataire: Air Liquide

(56) Documents cités:
- FR-A1- 3 041 624
- US-A1- 2013 263 610
- US-A1- 2015 027 136
- US-A1- 2018 202 609

## Description

L'invention concerne un procédé et un dispositif de remplissage d'un stockage de gaz liquéfié.

L'invention concerne plus particulièrement un procédé de remplissage d'un stockage de gaz liquéfié au moyen d'un réservoir de gaz liquéfié, le procédé comprenant une étape de transfert de gaz liquéfié du réservoir vers le stockage par différentiel de pression, dans lequel le stockage a, préalablement à l'étape de transfert, une pression interne supérieure à la pression interne du réservoir, le procédé comprenant, préalablement à l'étape de transfert, une étape de mise en relation fluidique par équilibrage de pression du réservoir (10) et du stockage (2) pour assurer une baisse de la pression dans le stockage (2) au profit du réservoir (10) et une étape d'augmentation de la pression dans le réservoir (10) via un dispositif (3, 6) de mise en pression.

US 2018/202609 A divulgue un tel procédé.

Généralement, la livraison d'hydrogène liquide à une installation est réalisée par différence de pression. Typiquement, le stockage à remplir est à une pression comprise entre 3 et 13 bara et le liquide contenu dans le réservoir de livraison est à une pression comprise entre 0,3 barg et 13 barg.

Pour réaliser ce transfert par différentiel de pression (sans pompe), dans la plupart des cas, il faut d'abord pressuriser le réservoir de la semi-remorque de livraison à une pression typiquement supérieure de 1 barg à la pression du stockage fixe à remplir.

Cette pressurisation est réalisée classiquement par un dispositif appelé réchauffeur de mise en pression. Du liquide froid est soutiré du réservoir par gravité et est vaporisé dans un échangeur typiquement atmosphérique situé à un point bas du réservoir. Le dispositif comprend donc un point chaud en position basse. Un écoulement par thermosiphon se forme et le gaz chaud créé est alors naturellement renvoyé dans le réservoir. Ceci provoque une pressurisation du réservoir. La vitesse de pressurisation dépend typiquement de la taille de l'échangeur de réchauffage et du diamètre des tuyauteries.

Ce dispositif présente cependant des inconvénients. Ainsi, le temps nécessaire pour la pressurisation peut être relativement long. De plus, la force motrice de l'écoulement du thermosiphon étant dépendante de la hauteur manométrique de liquide et de la différence de densité entre le liquide et le gaz, ce dispositif fonctionne moins bien lorsque le réservoir est vide ou presque vide. La pressurisation est d'autant plus longue à obtenir. De plus, cette pressurisation introduit de la chaleur dans l'installation. Ceci se traduit par un réchauffement de l'hydrogène liquide ce qui au final augmente la quantité de gaz perdu par évaporation dans la logistique.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que l'étape d'augmentation de la pression dans le réservoir (10) via le dispositif (3, 6) de mise en pression est réalisée en même temps que l'étape mise en relation fluidique du réservoir (10) et du stockage (2).

Par ailleurs, des modes de réalisation de l'invention peuvent comporter l'une ou plusieurs des caractéristiques suivantes :
- l'étape mise en relation fluidique du réservoir et du stockage abaisse la pression dans le stockage au profit du réservoir jusqu'à un niveau déterminé dans lequel la pression dans le stockage est égale à la pression dans le réservoir ou excède la pression dans le réservoir d'une valeur limitée déterminée comprise entre 0,5 et 5bar et notamment comprise entre 0,5 et 1bar,
- l'étape d'augmentation de la pression dans le réservoir augmente la pression dans le réservoir jusqu'à un niveau déterminé dans lequel la pression dans le réservoir excède la pression dans le stockage d'une valeur déterminée comprise entre 0,5 et 5bar et notamment entre 1 et 2 bar,
- l'étape mise en relation fluidique du réservoir et du stockage est réalisé via au moins une conduite de transfert ayant une extrémité reliée à la partie inférieure et/ou à la partie supérieure du réservoir et une autre extrémité reliée à la partie inférieure et/ou à la partie supérieure du stockage,
- l'étape mise en relation fluidique du réservoir et du stockage est réalisé via au moins une conduite de transfert ayant une extrémité reliée à la partie supérieure du réservoir et une extrémité reliée à la partie supérieure du stockage,
- le dispositif de mise en pression du réservoir comprend un circuit de mis en pression du réservoir comprenant, entre une première extrémité d'aspiration de fluide raccordée au réservoir et une seconde extrémité de retour du fluide raccordée au réservoir, un organe de réchauffage du fluide et un ensemble de vanne(s) de réchauffage pour contrôler la circulation du fluide dans ledit circuit de mise en pression.

L'invention concerne également un dispositif de remplissage d'un stockage de gaz liquéfié comprenant un réservoir de gaz liquéfié destiné à transférer du gaz liquéfié dans le stockage par différentiel de pression, le dispositif comprenant un circuit de mise en pression du réservoir comprenant, entre une première extrémité d'aspiration de fluide raccordée au réservoir et une seconde extrémité de retour du fluide raccordée au réservoir, un organe de réchauffage du fluide et un ensemble de vanne(s) de réchauffage pour le contrôle de la circulation du fluide dans ledit circuit de mise en pression, le dispositif comprenant en outre au moins une conduite de transfert de fluide comprenant une première extrémité reliée au réservoir et une seconde extrémité destinée à être reliée au stockage et comprenant un ensemble de vanne(s) de transfert pour contrôler la circulation du fluide dans ladite conduite de transfert, le dispositif comprenant un ensemble de capteur(s) de mesure de la pression dans le réservoir et/ou dans le stockage, le dispositif comprenant en outre une conduite de transfert de fluide ayant une première extrémité reliée à l'extrémité supérieure du réservoir et une autre extrémité destinée à être reliée à l'extrémité supérieure du stockage.

Selon d'autres particularités possibles le dispositif comprend un organe de commande électronique de stockage et de traitement de données configuré pour piloter au moins une partie de l'ensemble de vannes, l'organe de commande étant configuré pour assurer, préalablement à un transfert de fluide du réservoir vers le stockage lorsque la pression dans le stockage est supérieure à la pression dans le réservoir: une ouverture de l'ensemble de vanne(s) de transfert pour assurer un transfert pression entre le stockage et le réservoir, et, après ou pendant transfert de pression entre le stockage et le réservoir, une ouverture de l'ensemble de vanne(s) de réchauffage pour augmenter la pression au sein du réservoir, puis une fermeture de l'ensemble de vanne(s) de réchauffage et une ouverture de l'ensemble de vanne(s) de transfert pour assurer un transfert de gaz liquéfié du réservoir vers le stockage par différentiel de pression.

L'invention peut concerner également tout dispositif ou procédé alternatif comprenant toute combinaison des caractéristiques ci-dessus ou ci-dessous dans le cadre des revendications.

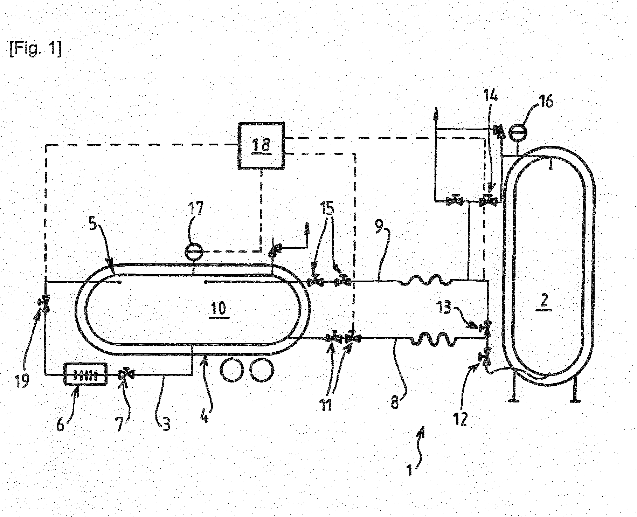

D'autres particularités et avantages apparaîtront à la lecture de la description ci-après, faite en référence à la
[Fig. 1] qui représente une vue schématique et partielle illustrant un exemple de structure et de fonctionnement d'un dispositif selon l'invention.

L'installation 1 représenté à la [Fig. 1] comprend un dispositif de remplissage d'un stockage 2 de gaz liquéfié. Le stockage 2 est par exemple un stockage fixe à double enveloppe isolé sous vide et contenant de l'hydrogène liquéfié.

L'installation 1 comprend un réservoir 10 de gaz liquéfié (de l'hydrogène liquéfié par exemple), par exemple porté par un semi-remorque et destiné à transférer du gaz liquéfié dans le stockage 2 par différentiel de pression.

Le réservoir 10 comprend un réchauffeur de mise en pression c'est-à-dire un circuit 3 de mise en pression du réservoir 10 tel qu'évoqué ci-dessus. Ce circuit 3 de mise en pression comprend, entre une première extrémité 4 d'aspiration de fluide raccordée au réservoir 10 (partie basse notamment) et une seconde extrémité 5 de retour du fluide raccordée au réservoir 10 (en partie haute notamment), un organe 6 de réchauffage du fluide (échangeur de chaleur atmosphérique ou autre disposé en partie basse) et un ensemble de vanne (s) 7 19 de réchauffage. Par exemple, le circuit 3 de mise en pression comprend une vanne 7 de réchauffage de préférence commandée et automatique pour contrôler de la circulation du fluide dans ledit circuit 3 de mise en pression (par thermosiphon) et une vanne 19 d'arrêt (de préférence à commande manuelle).

Le dispositif 1 comprend en outre au moins une conduite (et dans cet exemple deux conduites 8, 9) de transfert de fluide comprenant chacune une première extrémité reliée au réservoir 10 et au moins une seconde extrémité destinée à être reliée au stockage 2. La ou les conduites 8, 9 de transfert peuvent être reliées en parallèle à l'extrémité inférieur et/ou à l'extrémité supérieure du stockage 2 via une circuiterie appropriée.

L'installation et notamment chaque conduite 8, 9 de transfert comprend un ensemble de vannes 11, 12, 13, 14, 15 de transfert pour contrôler la circulation du fluide dans la ou les conduites 8, 9 de transfert. Par exemple, une première conduite 8 de transfert reliée à l'extrémité inférieure du réservoir 10 comprend deux vannes 11 en série qui peuvent être constituées respectivement d'une vanne d'arrêt automatique de sécurité et d'une vanne d'arrêt à commande manuelle.

De la même façon, la seconde conduite 9 de transfert (reliée à la partie haute du réservoir 10) peut comprendre deux vannes 15 en série qui peuvent être constituées par exemple respectivement d'une vanne d'arrêt automatique de sécurité et d'une vanne d'arrêt à commande manuelle.

Chaque conduite de transfert 8, 9 peut posséder une extrémité flexible qui vient se raccorder à la circuiterie du stockage 2 permettant de communiquer avec l'extrémité supérieure et/ou avec l'extrémité inférieur du stockage. La circuiterie du stockage comporte avantageusement un ensemble de vannes 12, 13, 14 qui peuvent être des vannes pilotées ou manuelles. Le réservoir 10 et le stockage 2 peuvent comporter des dispositifs classiques de mise à l'air/ soupape de protection.

Ainsi, un opérateur de livraison peut raccorder la ou les conduites 8, 9 de transfert du réservoir 10 mobile à la circuiterie du stockage 2. Si la pression dans le stockage 2 est supérieure à la pression dans le réservoir 10 empêchant un transfert par différence de pression, l'opérateur peut ouvrir les vannes 14 et 15 (mise en relation des parties supérieurs du réservoir 10 et du stockage 2) et/ou les vannes 13 et 11 (mise en relation des parties inférieures du réservoir 10 et du stockage 2) pour équilibrer les pressions au sein du réservoir 10 et du stockage 2. Selon une autre possibilité non imitative, l'opérateur peut ouvrir la vanne 14 (reliant la partie supérieure du stockage 2) et utiliser la ligne 9 reliée à la partie supérieure du réservoir (en ouvrant la vanne 15) et/ou la ligne 8 reliée à la partie inférieure du réservoir 10 (en ouvrant les vannes 11 et 13)
Lorsque la pression au sein du réservoir 10 atteint ou s'approche suffisamment de la pression du stockage (par exemple différence de pression de 5bar ou moins (et notamment différence comprise entre 0,5 et 1 bar par exemple). Les vannes 11, 15 de transfert peuvent être fermées.

L'opérateur peut alors ouvrir le vannes 7, 19 de réchauffage pour augmenter la pression dans le réservoir 10 en activant la boucle de réchauffage.

Lorsque la pression dans le réservoir 10 excède suffisamment la pression dans le stockage 2 (par exemple de 0,5 à 5 bar, notamment un à deux bar), les vannes 7, 19 de réchauffage peuvent être fermées. Tout ou partie des vannes 11, 15, 12, 13, 14 de transfert peuvent ensuite être ouvertes pour assurer un remplissage du stockage par différentiel de pression. Ce remplissage peut consister à alimenter le stockage 2 par le bas (vanne 13 correspondante ouverte) pour augmenter la pression dans le stockage et/ou par le haut (vanne 14 correspondante ouverte) pour diminuer la pression dans le stockage 2.

A noter que, avantageusement, l'augmentation de la pression dans le réservoir 10 (activant la boucle de réchauffage) peut être commencé même pendant l'opération d'équilibrage des pressions au sein du réservoir 10 et du stockage 2 (vannes 11, 15 et 14 et/ou 13 ouvertes). Ceci permet d'accélérer encore la mise en pression du réservoir 10.

Le réservoir 10 et/ou le stockage 2 peuvent comprendre un ensemble de capteur(s) 16, 17 de mesure de la pression.

L'installation (par exemple le réservoir 10 mobile ou une unité de pilotage externe) peut comporter organe 18 de commande électronique de stockage et de traitement de données configuré pour piloter tout ou partie des vannes. Cet organe 18 de commande électronique peut comprendre un microprocesseur, un ordinateur ou tout autre appareil approprié.

Cet organe 18 de commande peut piloter tout ou partie des vannes ou autre composant du dispositif et peut recevoir notamment des mesures de pression précités ainsi que des instructions de remplissage ou d'arrêt.

Cet organe 18 de commande peut automatiser ou contrôler tout ou partie des opérations manuelles décrites ci-dessus.

Ainsi, lorsqu'un réservoir 10 de remplissage vient se raccorder à un stockage 2 en vue de son remplissage et que la pression dans le stockage 2 est supérieure à la pression dans le réservoir 10, l'organe 18 de commande peut être configuré pour assurer, préalablement à un transfert de fluide du réservoir 10 vers le stockage 2, une ouverture de l'ensemble de vanne(s) de transfert 11, 15 et 14 pour assurer un transfert pression entre le stockage 2 et le réservoir 10.

Comme précédemment, ceci est prévu pour abaisser la pression du stockage au profit du réservoir 10.

Lorsqu'un équilibrage de pression déterminé est atteint ces vannes sont refermées pour isoler le stockage 2 et le réservoir 10. Dans cette configuration (ou avant même la fin de ce transfert de pression), la pressurisation du réservoir 10 peut être activée (ouverture de l'ensemble de vannes 7, 19 de réchauffage pour augmenter la pression au sein du réservoir 10 comme décrit ci-dessus).

Lorsque la pression dans le réservoir 10 atteint une valeur suffisante au-dessus de la pression dans le stockage 2 la pressurisation peut être interrompue et un transfert de liquide du réservoir vers le stockage par différentiel de pression peut être réalisé.

Le procédé et dispositif permet ainsi d'utiliser la pression du stockage 2 pour de pressuriser plus rapidement le réservoir 10 de livraison. Le gain de temps estimé peut atteindre dans certains cas 30 minutes à 2 heures par livraison, notamment dans le cas de plusieurs livraisons successives.

Le réservoir 10 est ainsi pressurisé par du gaz relativement froid. Les apports énergétiques dans le réservoir 10 sont donc limités.

## Revendications

1. Procédé de remplissage d'un stockage (2) de gaz liquéfié au moyen d'un réservoir (10) de gaz liquéfié, le procédé comprenant une étape de transfert de gaz liquéfié du réservoir (10) vers le stockage (2) par différentiel de pression, dans lequel le stockage (2) a, préalablement à l'étape de transfert, une pression interne supérieure à la pression interne du réservoir (10), le procédé comprenant, préalablement à l'étape de transfert, une étape de mise en relation fluidique par équilibrage de pression du réservoir (10) et du stockage (2) pour assurer une baisse de la pression dans le stockage (2) au profit du réservoir (10) et une étape d'augmentation de la pression dans le réservoir (10) via un dispositif (3, 6) de mise en pression, **caractérisé en ce que** l'étape d'augmentation de la pression dans le réservoir (10) via le dispositif (3, 6) de mise en pression est réalisée en même temps que l'étape mise en relation fluidique du réservoir (10) et du stockage (2).

2. Procédé selon la revendication 1, **caractérisé en ce que** l'étape mise en relation fluidique du réservoir (10) et du stockage (2) abaisse la pression dans le stockage (2) au profit du réservoir (10) jusqu'à un niveau déterminé dans lequel la pression dans le stockage (2) est égale à la pression dans le réservoir (10) ou excède la pression dans le réservoir (10) d'une valeur limitée déterminée comprise entre 0,5 et 5bar et notamment comprise entre 0,5 et 1bar.

3. Procédé selon l'une quelconque des revendications 1 à 2, **caractérisé en ce que** l'étape d'augmentation de la pression dans le réservoir (10) augmente la pression dans le réservoir (10) jusqu'à un niveau déterminé dans lequel la pression dans le réservoir (10) excède la pression dans le stockage (2) d'une valeur déterminée comprise entre 0,5 et 5bar et notamment entre 1 et 2 bar.

4. Procédé selon l'une quelconque des revendications 1 à 3, **caractérisé en ce que** l'étape mise en relation fluidique du réservoir (10) et du stockage (2) est réalisé via au moins une conduite de transfert (8, 9) ayant une extrémité reliée à la partie inférieure et/ou à la partie supérieure du réservoir (10) et une autre extrémité reliée à la partie inférieure et/ou à la partie supérieure du stockage (2).

5. Procédé selon la revendication 3, **caractérisé en ce que** l'étape mise en relation fluidique du réservoir (10) et du stockage (2) est réalisé via au moins une conduite de transfert (9) ayant une extrémité reliée à la partie supérieure du réservoir (10) et une extrémité reliée à la partie supérieure du stockage (2).

6. Procédé selon l'une quelconque des revendications 1 à 5, **caractérisé en ce que** le dispositif (3, 6) de mise en pression du réservoir (10) comprend un circuit (3) de mis en pression du réservoir (10) comprenant, entre une première extrémité (4) d'aspiration de fluide raccordée au réservoir (10) et une seconde extrémité (5) de retour du fluide raccordée au réservoir (10), un organe (6) de réchauffage du fluide et un ensemble de vanne(s) (7, 19) de réchauffage pour contrôler la circulation du fluide dans ledit circuit (3) de mise en pression.

7. Dispositif de remplissage d'un stockage (2) de gaz liquéfié comprenant un réservoir (10) de gaz liquéfié destiné à transférer du gaz liquéfié dans le stockage (2) par différentiel de pression, le dispositif comprenant un circuit (3) de mise en pression du réservoir (10) comprenant, entre une première extrémité (4) d'aspiration de fluide raccordée au réservoir (10) et une seconde extrémité (5) de retour du fluide raccordée au réservoir (10), un organe (6) de réchauffage du fluide et un ensemble de vanne(s) (7, 19) de réchauffage pour le contrôle de la circulation du fluide dans ledit circuit (3) de mise en pression, le dispositif comprenant en outre au moins une conduite (8, 9) de transfert de fluide comprenant une première extrémité reliée au réservoir (10) et une seconde extrémité destinée à être reliée au stockage (2) et comprenant un ensemble de vanne(s) (11, 12, 13, 14, 15) de transfert pour contrôler la circulation du fluide dans ladite conduite (8, 9) de transfert, le dispositif comprenant un ensemble de capteur(s) (16, 17) de mesure de la pression dans le réservoir (10) et/ou dans le stockage (2), **caractérisé en ce que** le dispositif comprend une conduite (9) de transfert de fluide ayant une première extrémité reliée à l'extrémité supérieure du réservoir et une autre extrémité destinée à être reliée à l'extrémité supérieure du stockage (2), et qu'il comprend un organe (18) de commande électronique de stockage et de traitement de données configuré pour piloter au moins une partie de l'ensemble de vannes, l'organe (18) de commande étant configuré pour assurer, préalablement à un transfert de fluide du réservoir (10) vers le stockage (2) lorsque la pression dans le stockage (2) est supérieure à la pression dans le réservoir (10) : une ouverture de l'ensemble de vanne(s) de transfert pour assurer un transfert pression par équilibrage de pression entre le stockage (2) et le réservoir (10), et, pendant le transfert de pression entre le stockage (2) et le réservoir (10), une ouverture de l'ensemble de vanne(s) de réchauffage pour augmenter la pression au sein du réservoir (10), puis une fermeture de l'ensemble de vanne(s) de réchauffage et une ouverture de l'ensemble de vanne(s) de transfert pour assurer un transfert de gaz liquéfié du réservoir (10) vers le stockage (2) par différentiel de pression.

## Patentansprüche

1. Verfahren zum Füllen eines Flüssiggasspeichers (2) mittels eines Flüssiggastanks (10), wobei das Verfahren einen Schritt des Transfers von Flüssiggas vom Tank (10) zum Speicher (2) durch Druckdifferenz umfasst, wobei der Speicher (2) vor dem Schritt des Transfers einen Innendruck aufweist, der größer als der Innendruck des Tanks (10) ist, wobei das Verfahren vor dem Schritt des Transfers einen Schritt der Herstellung einer Fluidverbindung durch Druckausgleich des Tanks (10) und des Speichers (2), um eine Verringerung des Drucks im Speicher (2) zugunsten des Tanks (10) sicherzustellen, und einen Schritt der Erhöhung des Drucks im Tank (10) über eine Vorrichtung (3, 6) zur Druckbeaufschlagung umfasst, **dadurch gekennzeichnet, dass** der Schritt der Erhöhung des Drucks im Tank (10) über die Vorrichtung (3, 6) zur Druckbeaufschlagung gleichzeitig mit dem Schritt der Herstellung einer Fluidverbindung des Tanks (10) und des Speichers (2) durchgeführt wird.

2. Verfahren nach Anspruch 1, **dadurch gekennzeichnet, dass** der Schritt der Herstellung einer Fluidverbindung des Tanks (10) und des Speichers (2) den Druck im Speicher (2) zugunsten des Tanks (10) auf eine bestimmte Höhe verringert, bei welcher der Druck im Speicher (2) gleich dem Druck im Tank (10) ist oder den Druck im Tank (10) um einen bestimmten begrenzten Wert überschreitet, der zwischen 0,5 und 5 bar liegt und insbesondere zwischen 0,5 und 1 bar liegt.

3. Verfahren nach einem der Ansprüche 1 bis 2, **dadurch gekennzeichnet, dass** der Schritt der Erhöhung des Drucks im Tank (10) den Druck im Tank (10) auf eine bestimmte Höhe erhöht, bei welcher der Druck im Tank (10) den Druck im Speicher (2) um einen bestimmten Wert überschreitet, der zwischen 0,5 und 5 bar und insbesondere zwischen 1 und 2 bar liegt.

4. Verfahren nach einem der Ansprüche 1 bis 3, **dadurch gekennzeichnet, dass** der Schritt der Herstellung einer Fluidverbindung des Tanks (10) und des Speichers (2) über mindestens eine Transferleitung (8, 9) durchgeführt wird, die ein Ende, das mit dem unteren Teil und/oder mit dem oberen Teil des Tanks (10) verbunden ist, und ein anderes Ende, das mit dem unteren Teil und/oder mit dem oberen Teil des Speichers (2) verbunden ist, aufweist.

5. Verfahren nach Anspruch 3, **dadurch gekennzeichnet, dass** der Schritt der Herstellung einer Fluidverbindung des Tanks (10) und des Speichers (2) über mindestens eine Transferleitung (9) durchgeführt wird, die ein mit dem oberen Teil des Tanks (10) verbundenes Ende und ein mit dem oberen Teil des Speichers (2) verbundenes Ende aufweist.

6. Verfahren nach einem der Ansprüche 1 bis 5, **dadurch gekennzeichnet, dass** Vorrichtung (3, 6) zur Druckbeaufschlagung des Tanks (10) einen Kreis (3) zur Druckbeaufschlagung des Tanks (10) umfasst, der zwischen einem ersten Ende (4) zur Fluidansaugung, das an den Tank (10) angeschlossen ist, und einem zweiten Ende (5) zum Rückfluss des Fluids, das an den Tank (10) angeschlossen ist, ein Organ (6) zur Erwärmung des Fluids und eine Anordnung eines Heizventils (von Heizventilen) (7, 19) zum Steuern der Strömung des Fluids in dem Kreis (3) zur Druckbeaufschlagung umfasst.

7. Vorrichtung zum Füllen eines Flüssiggasspeichers (2), welche einen Flüssiggastank (10) umfasst, der dazu bestimmt ist, Flüssiggas durch Druckdifferenz in den Speicher (2) überzuleiten, wobei die Vorrichtung einen Kreis (3) zur Druckbeaufschlagung des Tanks (10) umfasst, der zwischen einem ersten Ende (4) zur Fluidansaugung, das an den Tank (10) angeschlossen ist, und einem zweiten Ende (5) zum Rückfluss des Fluids, das an den Tank (10) angeschlossen ist, ein Organ (6) zur Erwärmung des Fluids und eine Anordnung eines Heizventils (von Heizventilen) (7, 19) zur Steuerung der Strömung des Fluids in dem Kreis (3) zur Druckbeaufschlagung umfasst, wobei die Vorrichtung außerdem mindestens eine Leitung (8, 9) zum Transfer von Fluid umfasst, die ein erstes Ende, das mit dem Tank (10) verbunden ist, und ein zweites Ende, das dazu bestimmt ist, mit dem Speicher (2) verbunden zu werden, umfasst, und eine Anordnung eines Transferventils (von Transferventilen) (11, 12, 13, 14, 15) zum Steuern der Strömung des Fluids in der Transferleitung (8, 9) umfasst, wobei die Vorrichtung eine Anordnung eines Sensors (von Sensoren) (16, 17) zur Messung des Drucks im Tank (10) und/oder im Speicher (2) umfasst, **dadurch gekennzeichnet, dass** die Vorrichtung eine Leitung (9) zum Transfer von Fluid umfasst, die ein erstes Ende, das mit dem oberen Ende des Tanks verbunden ist, und ein anderes Ende, das dazu bestimmt ist, mit dem oberen Ende des Speichers (2) verbunden zu werden, aufweist, und dass sie ein Organ (18) zur elektronischen Steuerung der Speicherung und Verarbeitung von Daten umfasst, die dafür ausgelegt ist, wenigstens einen Teil der Anordnung von Ventilen zu steuern, wobei das Steuerungsorgan (18) dafür ausgelegt ist, vor einem Transfer von Fluid vom Tank (10) zum Speicher (2), wenn der Druck im Speicher (2) höher als der Druck im Tank (10) ist, sicherzustellen: ein Öffnen der Anordnung eines Transferventils (von Transferventilen), um einen Drucktransfer durch Druckausgleich zwischen dem Speicher (2) und dem Tank (10) sicherzustellen, und während des Drucktransfers zwischen dem Speicher (2) und dem Tank (10) ein Öffnen der Anordnung eines Heizventils (von Heizventilen), um den Druck im Inneren des Tanks (10) zu erhöhen, danach ein Schließen der Anordnung eines Heizventils (von Heizventilen) und ein Öffnen der Anordnung eines Transferventils (von Transferventilen), um einen Transfer von Flüssiggas vom Tank (10) zum Speicher (2) durch Druckdifferenz sicherzustellen.

## Claims

1. Method for filling a storage vessel (2) with liquefied gas by means of a tank (10) of liquefied gas, the method comprising a step of transferring liquefied gas from the tank (10) into the storage vessel (2) by means of a pressure differential, wherein the storage vessel (2) prior to the transfer step has an internal pressure higher than the internal pressure of the tank (10), the method comprising, prior to the transfer step, a step of placing the tank (10) and the storage vessel (2) in fluidic communication by equalizing of pressure between the tank and the storage vessel in order to ensure a drop in the pressure in the storage vessel (2) to the benefit of the tank (10), and a step of increasing the pressure in the tank (10) using a pressurizing device (3, 6), **characterized in that** the step of increasing the pressure in the tank (10) via the pressurizing device (3, 6) is performed at the same time as the step of placing the tank (10) and the storage vessel (2) in fluidic communication.

2. Method according to Claim 1, **characterized in that** the step of placing the tank (10) and the storage vessel (2) in fluidic communication lowers the pressure in the storage vessel (2) to the benefit of the tank (10) down to a determined level in which the pressure in the storage vessel (2) is equal to the pressure in the tank (10) or exceeds the pressure in the tank (10) by a determined limited value of between 0.5 and 5 bar, and notably of between 0.5 and 1 bar.

3. Method according to either one of Claims 1 and 2, **characterized in that** the step of increasing the pressure in the tank (10) increases the pressure in the tank (10) up to a determined level in which the pressure in the tank (10) exceeds the pressure in the storage vessel (2) by a determined value of between 0.5 and 5 bar, and notably of between 1 and 2 bar.

4. Method according to any one of Claims 1 to 3, **characterized in that** the step of placing the tank (10) and the storage vessel (2) in fluidic communication is performed via at least one transfer pipe (8, 9) having one end connected to the lower part and/or to the upper part of the tank (10) and another end connected to the lower part and/or to the upper part of the storage vessel (2) .

5. Method according to Claim 3, **characterized in that** the step of placing the tank (10) and the storage vessel (2) in fluidic communication is performed via at least one transfer pipe (9) having one end connected to the upper part of the tank (10) and one end connected to the upper part of the storage vessel (2).

6. Method according to any one of Claims 1 to 5, **characterized in that** the device (3, 6) for pressurizing the tank (10) comprises a pressurizing circuit (3) for pressurizing the tank (10) comprising, between a fluid-aspiration first end (4) connected to the tank (10) and a fluid-return second end (5) connected to the tank (10), a fluid heating member (6) and a set of one or more heating valves (7, 19) for controlling the circulation of the fluid in said pressurizing circuit (3).

7. Device for filling a liquefied-gas storage vessel (2) comprising a tank (10) of liquefied gas intended to transfer liquefied gas into the storage vessel (2) by means of a pressure differential, the device comprising a pressurizing circuit (3) for pressurizing the tank (10), comprising, between a fluid-aspiration first end (4) connected to the tank (10) and a fluid-return second end (5) connected to the tank (10), a fluid heating member (6) and a set of one or more heating valves (7, 19) for controlling the circulation of the fluid in said pressurizing circuit (3), the device further comprising at least one fluid transfer pipe (8, 9) comprising a first end connected to the tank (10) and a second end intended to be connected to the storage vessel (2) and comprising a set of one or more transfer valves (11, 12, 13, 14, 15) for controlling the circulation of the fluid in said transfer pipe (8, 9), the device comprising a set of one or more sensors (16, 17) for measuring the pressure in the tank (10) and/or in the storage vessel (2), **characterized in that** the device comprises a fluid transfer pipe (9) having a first end connected to the upper end of the tank and another end intended to be connected to the upper end of the storage vessel (2), and **in that** it comprises an electronic control and data processing and storage member (18) configured to control at least part of the set of one or more valves, the control member (18) being configured to perform, prior to a transfer of fluid from the tank (10) to the storage vessel (2) when the pressure in the storage vessel (2) is higher than the pressure in the tank (10): an opening of the set of one or more transfer valves in order to ensure a transfer of pressure by equalizing of pressure between the storage vessel (2) and the tank (10), and, during the transfer of pressure between the storage vessel (2) and the tank (10), an opening of the set of one or more heating valves in order to increase the pressure in the tank (10), then a closing of the set of one or more heating valves and an opening of the set of one or more transfer valves in order to ensure a transfer of liquefied gas from the tank (10) to the storage vessel (2) using a pressure differential.
